# EUROPÄISCHE PATENTSCHRIFT

(11) **EP 3 231 633 B1**
(45) Veröffentlichungstag und Bekanntmachung des Hinweises auf die Patenterteilung: **29.12.2021**
(21) Anmeldenummer: 17152733.6
(22) Anmeldetag: 24.01.2017
(51) Int. Cl.: B60B 21/12, B60C 5/16, B29B 7/74

(54) **VERFAHREN ZUR HERSTELLUNG EINES WULSTBANDES**
METHOD FOR PRODUCTION OF A FLAP
PROCÉDÉ DE FABRICATION D'UNE BANDE DE JANTE

(30) Priorität: 14.04.2016 DE 102016206268
(43) Veröffentlichungstag der Anmeldung: 18.10.2017
(73) Patentinhaber: Continental Reifen Deutschland GmbH, 30165 Hannover (DE)
(72) Erfinder: Müller, Matthias-Stephan, 30827 Garbsen (DE); Weinhold, Hartmut, 38122 Braunschweig (DE)
(74) Vertreter: Continental Corporation

(56) Entgegenhaltungen:
- EP-A1- 0 561 762
- WO-A1-2017/012725
- DE-A1-102015 213 567
- US-A- 2 773 535
- US-A- 3 638 707
- US-A- 3 866 653

## Beschreibung

Die Erfindung betrifft ein Verfahren zur Herstellung eines Wulstbandes.

Die mit einem Luftschlauch verwendeten Fahrzeugluftreifen, üblicherweise Industriereifen, erfordern die Verwendung eines Wulstbandes. Bekannter Weise ist ein Wulstband ein ringförmiger Gummibauteil, der zwischen dem Luftschlauch und der Felge und den Wülsten des Reifens angeordnet ist. Das Wulstband verhindert ein Einquetschen des Luftschlauches zwischen der Felge und den Wülsten und schützt den Luftschlauch vor einem Kontakt oder vor Reibung mit der Felge. Im Bereich der Ventildurchführung bzw. des Ventilloches des Wulstbandes besteht aufgrund der Wirkung des Reifeninnendruckes die Gefahr, dass das Wulstband durch den Ventilsitz gedrückt wird. Dadurch können der Luftschlauch und das Wulstband beschädigt werden, was einen plötzlichen Innendruckverlust des Reifens zur Folge haben kann. Zur Abstützung des Wulstbandes im Bereich des Ventilloches ist es daher bekannt, zusätzliche Abdeckteile aus Metall oder Kunststoff einzubringen oder das Wulstband durch zusätzliche Maßnahmen, wie beispielsweise vulkanisierte Gewebe, zu verstärken. Das nachträgliche Einsetzen von Abdeckteilen ist insofern problematisch, als es häufig vergessen wird. Der Herstellprozess zum Aufbringen einer Gewebelage ist vergleichsweise aufwändig, da er die Verfügbarkeit des Materials im Herstellbetrieb und entsprechende Vorbereitungen erfordert.

Ein Wulstband der eingangs genannten Art ist beispielsweise aus der EP 0 561 762 A1 bekannt. Der verstärkte Abschnitt im Bereich des Ventilloches enthält geschnittene Korde, Fasern oder Fäden, insbesondere aus gummierten Rayon- und/oder Nylonfäden.

Aus der DE 1 680 438 A1 ist es bekannt, das Wulstband rund um das Ventilloch durch einen vom Wulstband unabhängigen Teil zu verstärken. Dieser Teil kann beispielsweise ein Plättchen mit ausreichender Festigkeit und Wärmebeständigkeit sein, welches ein Loch mit geeignetem Durchmesser aufweist, vorzugsweise ein Plättchen aus Metall, armiertem Kautschuk, gummiertem Gewebe und dergleichen, welches zwischen dem Wulstband und dem Felgenbett eingelegt wird.

Ein weiteres Wulstband ist aus der EP 0561762 A1 bekannt.

Der Erfindung liegt die Aufgabe zu Grunde, ein Wulstband der eingangs genannten Art herzustellen.

Gelöst wird die gestellte Aufgabe mit einem Verfahren nach Anspruch 1.

Das erfindungsgemäße Verfahren ist dadurch gekennzeichnet, dass Fasern oder Gewebeteilchen in eine Kautschukmischung eingearbeitet werden, welche zu einer dünnen Platte geformt wird, die in Stücke geschnitten wird, wobei bei der Vulkanisation des Wulstbandes in die Heizform ein Plattenstück eingelegt wird, sodass während des Vulkanisationsvorganges die noch fließfähige Kautschukmischung des Wulstbandes in die Bereiche oberhalb und/oder unterhalb des Plattenstückes fließt und dieses bedeckt.

Im Bereich um das Ventilloch weist das Wulstband eine Sandwich-Konstruktion auf, nämlich außenseitig jeweils eine Lage aus dem weichen Standard-Wulstbandgummi und innen eine harte Komponente, nämlich eine faserverstärkte Gummischicht. Die gemäß dem Verfahren einvulkanisierte Verstärkungsschicht kann sich, wie es bei außen aufgebrachten Gewebeschichten oft der Fall ist, nicht verschieben und es entfällt das nachträgliche Aufbringen solcher Gewebeschichten.

Bei einer bevorzugten Ausführung des Verfahrens gemäß der Erfindung wird die Platte vorvulkanisiert, bevor sie in Plattenstücke geschnitten wird. Diese Maßnahme erleichtert das Hantieren der Plattenstücke.

Bei einer bevorzugten Ausführungsform der Erfindung enthält die Verstärkungsschicht Fasern aus einem textilen Material, beispielsweise aus Nylon, Rayon oder Polyester. Die Fasern in der Verstärkungsschicht können ferner unterschiedliche Längen von 3 mm bis 50 mm aufweisen. Es kann daher in der Verstärkungsschicht Fasermaterial verwendet werden, welches bei der Reifenfertigung vielfach eingesetzt wird, sodass die Fasern von geschreddertem, kalandriertem Gewebe, welches bei der Reifenfertigung anfällt, stammen können.

Um eine optimale Verstärkungswirkung zu erzielen, ist es von Vorteil, wenn die Verstärkungsschicht zu 5 Gew. % bis 80 Gew. %, vorzugsweise zu mindestens 15 Gew. %, aus Fasern besteht. Die Härte Shore A der Verstärkungsschicht sollte bevorzugt 70 bis 99 betragen.

Die Dicke der Verstärkungsschicht beträgt bevorzugter Weise mindestens 50 % der Dicke des verstärkten Abschnittes des Wulstbandes.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1: einen Querschnitt durch ein Wulstband im Bereich des Ventilloches und
Fig. 2: einen Abschnitt des Querschnittes aus Fig. 1 in vergrößerter Darstellung
Fig. 3: das Einlegen der rechteckförmigen Platte und des Wulstbandes in einer dreidimensionalen Ansicht.
Fig. 4: einen Querschnitt durch eine weitere Wulstbandausführung im Bereich des Ventilloches
Fig. 5: einen Querschnitt durch eine weitere Wulstbandausführung im Bereich des Ventilloches

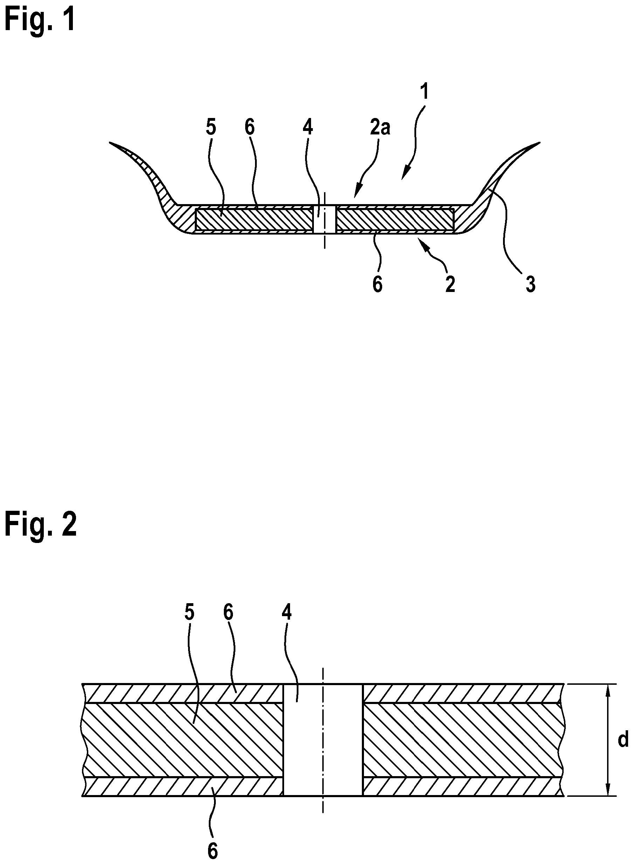

Das in den Figuren gezeigte Wulstband 1 ist in der üblichen Form eines Ringes mit einem muldenförmigen Querschnitt ausgeführt. Wie Fig. 1 zeigt, weist daher das Wulstband 1 einen Mittelteil 2 und an diesen anschließende Seitenteile 3 auf, deren Dicke zu den Rändern hin allmählich geringer wird. Das Wulstband 1 weist weiter zum Einführen bzw. Durchführen des Ventils eines Luftschlauches ein Ventilloch 4 auf. Im Bereich um das Ventilloch 4 ist der Mittelteil 2 über einen Abschnitt 2a, der sich in Längsrichtung des Wulstbandes 1 einige Zentimeter, je nach der Breite des Wulstbandes 1 beispielsweise 8 cm bis 12 cm, erstreckt, auf besondere Weise verstärkt und etwa doppelt so dick wie im sonstigen Mittelteil 2. So beträgt beispielsweise die Dicke d des Wulstbandes 1 im verstärkten Abschnitt 2a in der Größenordnung von 10 mm bis 15 mm.

Wie insbesondere Fig. 2 zeigt, enthält der vom Ventilloch 4 durchsetzte verstärkte Abschnitt 2a eine Verstärkungsschicht 5, die im Abschnitt 2a mindestens 50 % der Gesamtdicke d, insbesondere bis zu 80 % der Gesamtdicke d des Abschnittes 2a einnimmt. Die Verstärkungsschicht 5 ist ein rechteckiger Teil, dessen Breite im Wesentlichen der Breite des Mittelteils 2 entspricht und welches sich im Wesentlichen über die Länge des Abschnittes 2a erstreckt. Die Verstärkungsschicht 5 ist an ihrer Ober-und Unterseite jeweils mit einer entsprechend dünnen Gummischicht 6 aus dem Gummimaterial des Wulstbandes 1 bedeckt und daher komplett im Mittelteil 2 eingebettet. Dieses Gummimaterial beruht auf einer der üblichen, für Wulstbänder verwendeten Standardkautschukmischungen, die die gewünschten Eigenschaften des Wulstbandes 1, wie eine gute Flexibilität und eine geringe Härte Shore A von 40 bis 75, gemäß DIN 53505, sicherstellen.

Die Verstärkungsschicht 5 besteht aus in eine Gummimatrix eingebetteten Kurzfasern ohne Vorzugsorientierung und weist eine Härte Shore A von 70 bis 99, gemäß DIN 53505, auf. Die Fasern bestehen aus einem textilen Material, wie beispielsweise Nylon, Rayon oder Polyester, und weisen eine Länge in der Größenordnung von einigen Millimetern, insbesondere in der Größenordnung von 3 mm bis 50 mm, auf. Der Gewichtsanteil der Fasern in der Verstärkungsschicht 5 beträgt etwa 5 Gew. %, insbesondere 5 Gew. % bis 80 Gew. %, vorzugsweise mindestens 10 Gew. %. Bei einer bevorzugten Ausführungsform der Erfindung stammen die Fasern von geschreddertem, kalandriertem Gewebe, welches beispielsweise bei der Reifenfertigung anfällt.

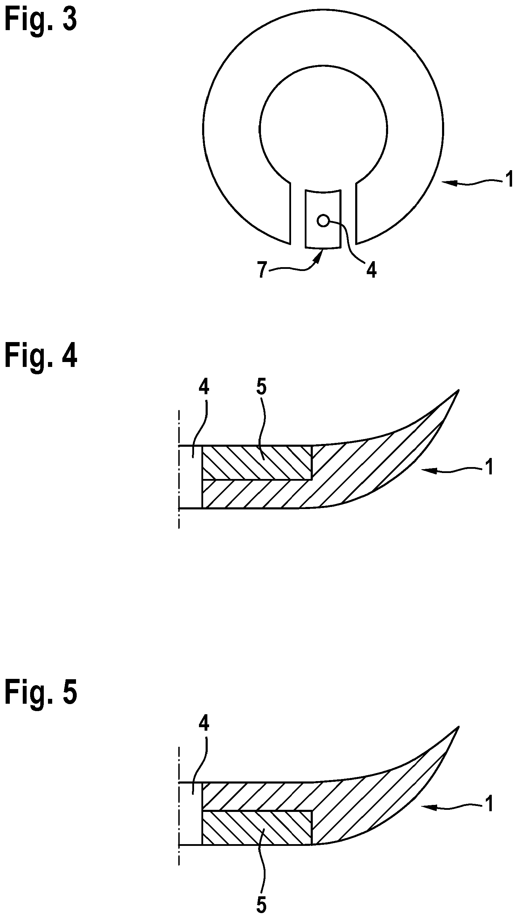

Die Fig. 3 zeigt schematisch einen Herstellungsschritt zur Herstellung des Wulstbandes. Die Fasern bzw. die Gewebeteilchen werden vorab in eine Kautschukmischung, die insbesondere Naturkautschuk und weitere übliche Mischungsbestandteile enthält, eingearbeitet und zu einer dünnen Platte geformt, welche vorvulkanisiert werden kann und in entsprechende rechteckige oder runde Plattenstücke zur Verstärkung der Wulstbänder 1 geschnitten wird.
Die Fig. 3 zeigt ein rechteckiges oder rundes Plattenstück 7 in dem in der Mitte einem Ventilloch 4 angeordnet wird. Das Plattenstück 7 wird mit dem Ventilloch 4 auf einen Dorn in der Heizform aufgesteckt und anschließend das Wulstband 1 eingelegt, welches mit seinen beiden Endbereichen seitlich an das Plattenstück ringförmig angebunden wird. Danach wird die Heizform geschlossen und die Vulkanisation durchgeführt.
Während des Vulkanisationsvorganges fließt die noch unvulkanisierte Kautschukmischung des Wulstbandes 1 in die Bereiche oberhalb und unterhalb des Plattenstückes 7 und bedeckt diese mit Gummimaterial des Wulstbandes.
Die Fig. 1 zeigt eine Ausführungsform bei der die Verstärkungsschicht 5 auf der Oberseite und der Unterseite mit Gummimaterial des Wulstbandes 1 bedeckt ist.
Die Fig. 4 zeigt eine weitere Ausführungsform bei der nur die untere Seite der Verstärkungsschicht 5 mit Gummimaterial des Wulstbandes 1 bedeckt ist.
Die Fig. 5 zeigt eine weitere Ausführungsform bei der nur die obere Seite der Verstärkungsschicht 5 mit Gummimaterial des Wulstbandes 1 bedeckt ist.
Bei diesen Ausführungsformen hat sich die Verstärkungsschicht 5 bzw. das Plattenstück 7 im Wesentlichen auf einer Seite in der Heizform angelegt.

### Bezugsziffernliste

- 1: Wulstband
- 2: Mittelteil
- 2a: Abschnitt
- 3: Seitenteil
- 4: Ventilloch
- 5: Verstärkungsschicht
- 6: Gummischicht
- 7: Plattenstück für die Bildung der Verstärkungsschicht
- d: Gesamtdicke

## Patentansprüche

1. Verfahren zur Herstellung eines im Bereich eines Ventilloches (4) einen Abschnitt (2a) mit einer Verstärkung aufweisenden Wulstbandes (1) aus einer Kautschukmischung für einen Fahrzeugluftreifen mit folgenden Schritten:
a) Einarbeiten von Fasern oder Gewebeteilchen in eine Kautschukmischung, wobei eine dünne Platte geformt wird,
b) Zuschneiden der dünnen Platten in einzelne-Plattenstücke,
c) Einlegen eines der Plattenstücke und eines Wulstbandes in eine Heizform,
wobei die beiden Endbereiche des Wulstbandes seitlich an die Seiten des rechteckigen Plattenstückes angelegt werden,
d) Vulkanisation des Plattenstückes und des Wulstbandes mit der Heizform, wobei bei dem Vulkanisationsvorgang die noch fließfähige Kautschukmischung des Wulstbandes (1) in die Bereiche oberhalb und/oder unterhalb des Plattenstückes fließt, wobei das Plattenstück in Form einer Verstärkungsschicht im Bereich eines Ventilloches fest mit dem Wulstband verbunden wird,
e) Entnahme des Wulstbandes mit der Verstärkung aus der Heizform.

2. Verfahren nach Anspruch 1,
**dadurch gekennzeichnet, dass**
nach Schritt b) die dünne Platte vorvulkanisiert wird.

3. Verfahren nach einem der vorhergehenden Ansprüche,
**dadurch gekennzeichnet, dass**
nach Schritt b) ein Ventilloch in das Plattenstück eingebracht wird und das Plattenstück bei Schritt c) auf einen Dorn in der Heizform gesteckt wird.

4. Verfahren nach einem der vorhergehenden Ansprüche,
**dadurch gekennzeichnet, dass**
bei Schritt b) die dünnen Platten in einzelne rechteckige oder runde Plattenstücke zugeschnitten werden.

## Claims

1. Method for producing a bead band (1), which has a portion (2a) with a reinforcement in the region of a valve hole (4), from a rubber compound for a pneumatic vehicle tyre, comprising the following steps of:
a) incorporating fibres or small woven fabric pieces into a rubber compound, wherein a thin sheet is formed,
b) cutting the thin sheets into individual sheet segments,
c) placing one of the sheet segments and a bead band into a heating mould,
wherein the two end regions of the bead band are placed laterally against the sides of the rectangular sheet segment,
d) vulcanizing the sheet segment and the bead band using the heating mould,
wherein the still-fluid rubber compound of the bead band (1) flows into the regions above and/or below the sheet segment during the vulcanization process,
wherein the sheet segment in the form of a reinforcing layer is connected firmly to the bead band in the region of a valve hole,
e) removing the bead band with the reinforcement from the heating mould.

2. Method according to Claim 1,
**characterized in that**
after step b), the thin sheet is pre-vulcanized.

3. Method according to either of the preceding claims,
**characterized in that**
after step b), a valve hole is introduced into the sheet segment and, in step c), the sheet segment is placed on a mandrel in the heating mould.

4. Method according to one of the preceding claims,
**characterized in that**
in step b), the thin sheets are cut into individual rectangular or round sheet segments.

## Revendications

1. Procédé de fabrication d'une bande de jante (1) présentant au niveau d'un trou de valve (4) une partie (2a) munie d'un renforcement, composée d'un mélange de caoutchouc pour un pneumatique de véhicule, comprenant les étapes suivantes consistant à :
a) incorporer des fibres ou des particules de tissu dans un mélange de caoutchouc en formant une plaque mince,
b) découper les plaques minces en morceaux de plaque individuels,
c) placer l'un des morceaux de plaque et une bande de jante dans un moule chauffé, les deux zones d'extrémité de la bande de jante étant appliquées latéralement sur les côtés du morceau de plaque rectangulaire,
d) vulcaniser le morceau de plaque et la bande de jante à l'aide du moule chauffé, dans lequel, lors du processus de vulcanisation, le mélange de caoutchouc toujours coulant de la bande de jante (1) coule dans les zones au-dessus et/ou au-dessous du morceau de plaque, le morceau de plaque, sous la forme d'une couche de renforcement au niveau d'un trou de valve, étant relié solidement à la bande de jante,
e) retirer du moule chauffé la bande de jante munie du renforcement.

2. Procédé selon la revendication 1, **caractérisé en ce que** la plaque mince est prévulcanisée après l'étape b) .

3. Procédé selon l'une quelconque des revendications précédentes, **caractérisé en ce qu'**après l'étape b), un trou de valve est pratiqué dans le morceau de plaque, et à l'étape c), le morceau de plaque est emmanché sur un mandrin dans le moule chauffé.

4. Procédé selon l'une quelconque des revendications précédentes, **caractérisé en ce qu'**à l'étape b), les plaques minces sont découpées en morceaux de plaque individuels rectangulaires ou ronds.
